# EUROPEAN PATENT APPLICATION

(11) **EP 1 802 041 A1**
(43) Date of publication of application: **27.06.2007**
(21) Application number: 05805479.2
(22) Date of filing: 01.11.2005
(51) Int. Cl.: H04L 12/28, H04B 7/26

(54) **COMMUNICATION APPARATUS**

(30) Priority: 02.11.2004 JP 2004319802
(71) Applicant: MATSUSHITA ELECTRIC INDUSTRIAL CO., LTD., Osaka 571-8501 (JP)
(72) Inventor: NAKA, Katsuyoshi Matsushita Electric Industrial Co.Ltd, Chuo-ku, Osaka-shi, Osaka 540-6319 (JP); IMAMURA, Daichi Matsushita Electric Industrial Co.Ltd, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/020128
(87) International publication number: WO 2006/049178

(57) **Abstract**

A communication apparatus exhibiting improved certainty and stability in communication. In a wireless terminal (100) serving as the communication apparatus, a transmission possibility determining part (186) uses an AIFS and a backoff value to control the transmission timing of transport data, and an AIFS managing part (181) adjusts the AIFS value related to the transport data in accordance with an elapsed time from the occurrence of a transmission request of the transport data. In this way, the AIFS value related to any transport data having a long elapsed time from the occurrence of a transmission request of the transport data can be reduced, and a predetermined wait time determined by the AIFS and backoff values also can be reduced. Accordingly, the probability of the transport data being transmitted with a higher priority than the other ones can be raised, whereby the possibility of the transport data being abandoned because of a timeout can be reduced. As a result, the certainty and stability in communication can be improved.

## Description

### Technical Field

The present invention relates to a communication apparatus particularly using a CSMA/CA (Carrier Sense Multiple Access with Collision Avoidance) scheme as an access scheme.

### Background Art

As a radio channel control scheme for supporting QoS (Quality of Service) in a wireless LAN system, an EDCA (Enhanced Distributed Channel Access) scheme is proposed (see non-patent document 1). This EDCA is a scheme of accessing to a data stream given a priority based on QoS using the CSMA/CA (Carrier Sense Multiple Access with Collision Avoidance) scheme that is a competitive base, and has a mechanism where a data stream with a high priority is more likely to win competition.

Two specific methods for causing a data stream with a high priority to tend to win competition are as below. First, waiting time AIFS (Arbitration Interframe Space) immediately before backoff is set per AC (access category; type of priority). Second, the maximum value and minimum value of a contention window (CW) of backoff are set per AC. Here, "backoff" is a random time set to perform carrier sense. Also, the "contention window" is a range of the backoff value.

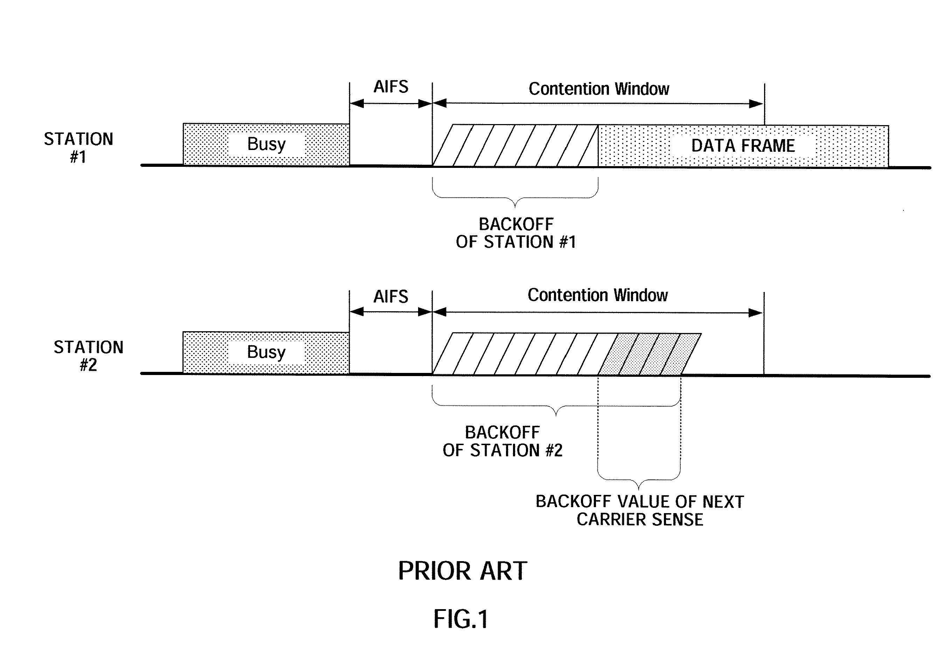

As shown in FIG. 1, stations (STA) and access points (AP) perform carrier sense corresponding to "predetermined waiting time (including, for example, AIFS) + backoff" after determining that a medium is in the idle state, and are able to start data transmission if the medium is in the idle state at that time. FIG.1 shows two stations (station #1 and station #2).

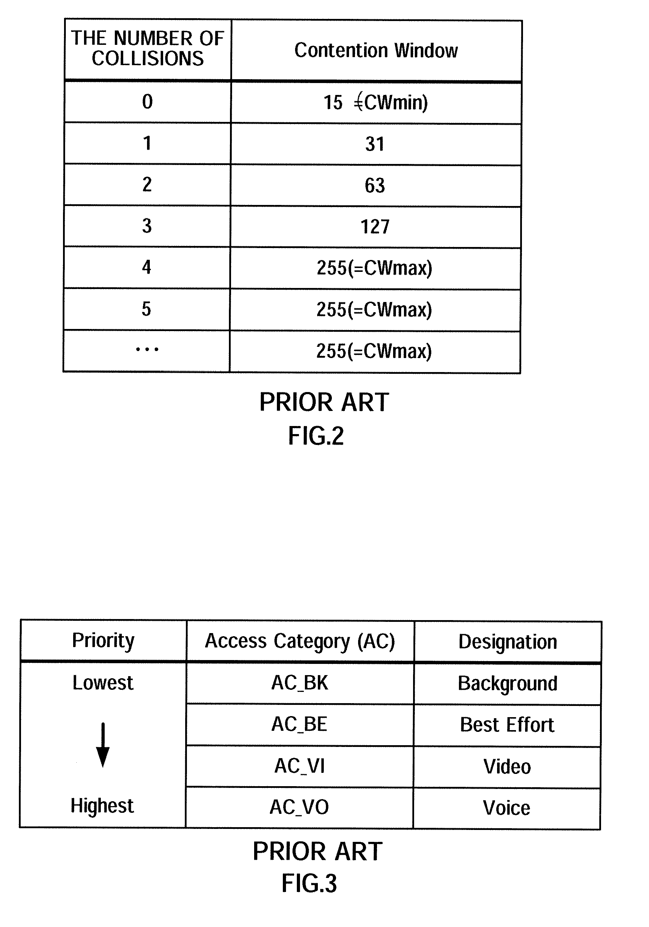

The stations and access points determine a backoff value randomly within a range of the contention window, thereby reducing the probability of simultaneous transmission from a plurality of stations, that is, the collision probability. When a collision occurs, the stations and the access points increase the contention window of the backoff in accordance with the number of collisions (see FIG.2), and thus reduce the re-collision probability (basic CSMA/CA scheme). FIG.2 shows a case where the minimum value (CWmin) and the maximum value (CWmax) of the contention window size are "15" and "255," respectively.

With the above-mentioned method, since the same operations are performed on all the data streams, data with a high priority is not always transmitted preferentially. Therefore, in non-patent document 1, by setting predetermined waiting time AIFS per data stream in accordance with the priority categorized as shown in FIG.3 and changing the minimum value and maximum value of the contention widow increased to avoid re-collision (FIG.4) in accordance with the priority, control is performed such that a data stream with a higher priority is more likely to be transmitted preferentially (see FIG.5) . FIG.5 shows station #1 and station #2 when aCWmin is "15."
Non-patent Document 1: "Draft Amendment to STANDARD Information Technology-Telecommunications and Information Exchange Between Systems-LAN/MAN Specific Requirements-Part 11: Wireless Medium Access Control (MAC) and Physical Layer (PHY) specifications: Medium Access Control (MAC) Quality of Service (QoS) Enhancements", IEEE P802.11e/D8.0, February 2004.

### Disclosure of Invention

### Problems to be Solved by the present invention

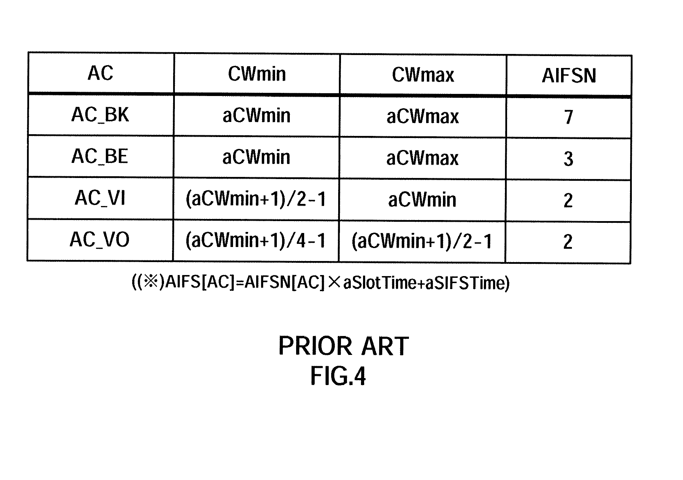

However, in the conventional communication systems, the stations and access points determine the predetermined waiting time AIFS only according to the types of data as shown in FIG. 4, and the contention window increases as the number of collisions increases. Therefore, when the medium is in the busy state, a data frame with a low priority is more likely to be discarded by timeout, and the communication thus becomes uncertain and unstable. With transmission data, timeout interval corresponding to a type of the data is determined, and when transmission of the data is not completed until the timeout interval, the data is discarded.

It is therefore an object of the present invention to provide a communication apparatus that improves reliability and stability of communication.

### Means for Solving the Problem

A communication apparatus of the present invention adopts a configuration provided with a transmission controlling section that controls transmission timing of transmission data using predetermined waiting time (AIFS) depending on a data type and a backoff value; and an AIFS setting section that adjusts the AIFS of the transmission data in accordance with an elapsed time from an occurrence of a transmission request for the transmission data or the number of retransmissions of the transmission data.

### Advantageous Effect of the Invention

According to the present invention, it is possible to provide a communication apparatus that improves reliability and stability of communication.

### Brief Description of Drawings

FIG.1 is a diagram for use in explanation of the operations of a conventional station;
FIG.2 is a table illustrating the relationship between the number of collisions of transmission data and contention window in the conventional station and the access point;
FIG.3 is a table illustrating the relationship between the access category of the transmission data and priority of the access category in the conventional station and the access point;
FIG.4 is a table illustrating the relationship between the access category and the minimum value and maximum value of a contention window in the conventional station and the access point;

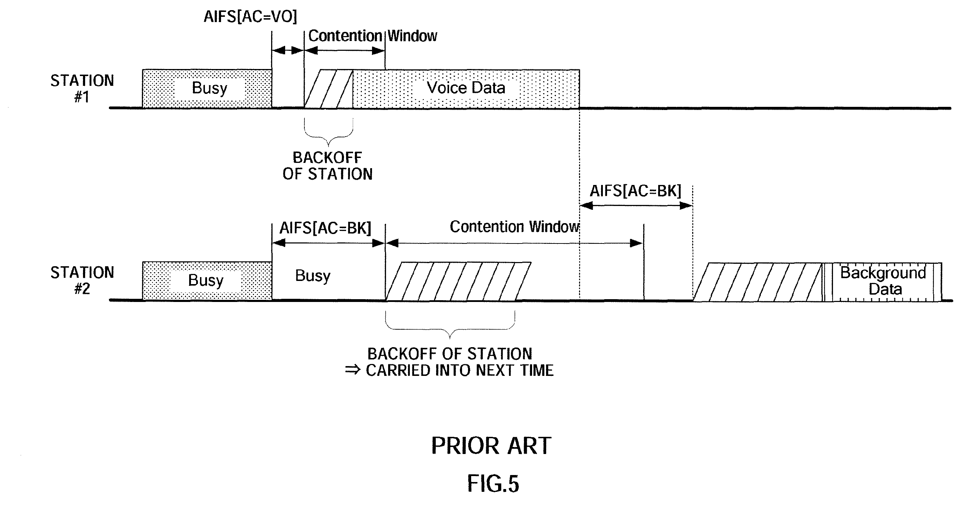

FIG.5 is another diagram for use in explanation of the operations of the conventional station;

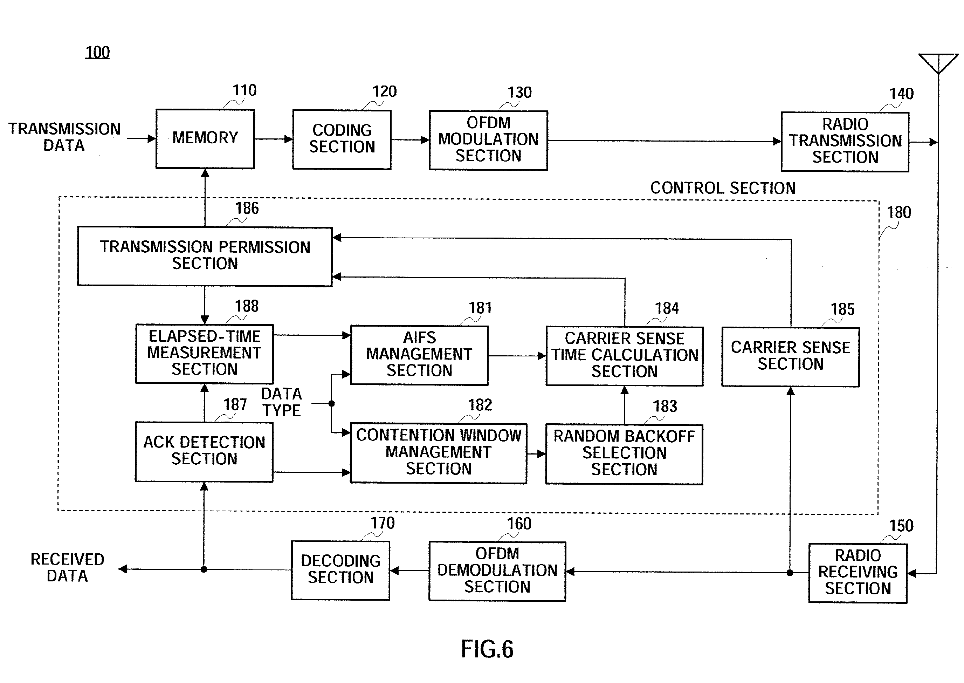

FIG.6 is a block diagram illustrating a configuration of a station according to Embodiment 1 of the present invention;

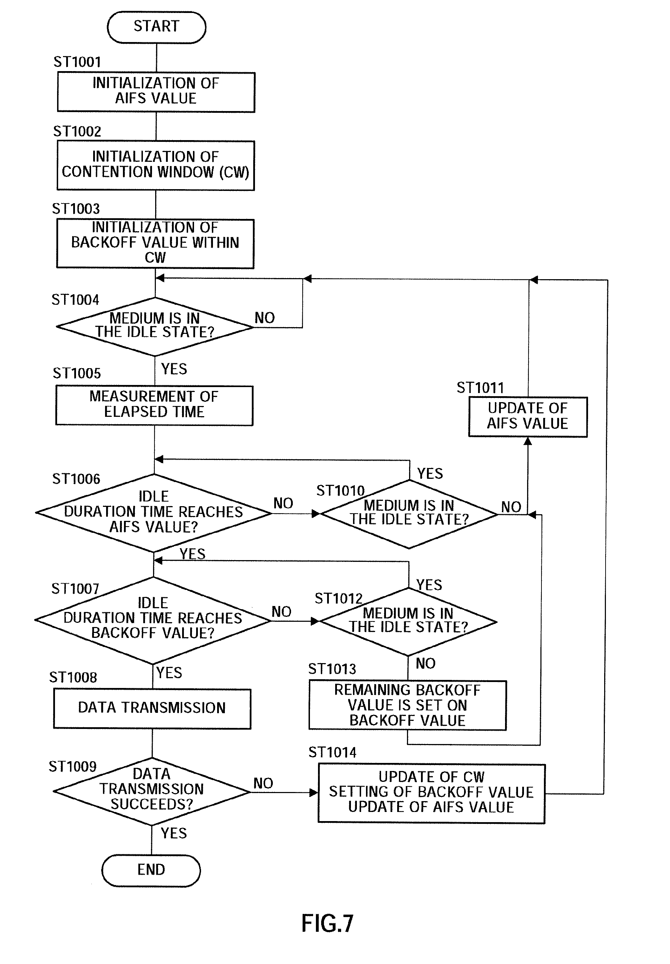

FIG.7 is a flow diagram to explain the operations of a control section of FIG.6;

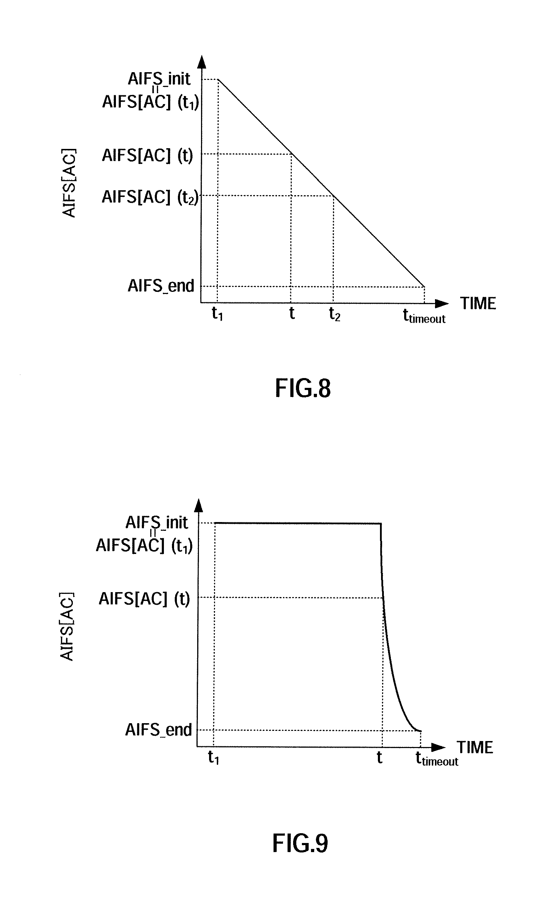

FIG.8 is a graph for use in explanation of a method of calculating an AIFS value in an AIFS management section of FIG.6;
FIG.9 is a graph for use in explanation of another method of calculating an AIFS value in the AIFS management section of FIG.6;

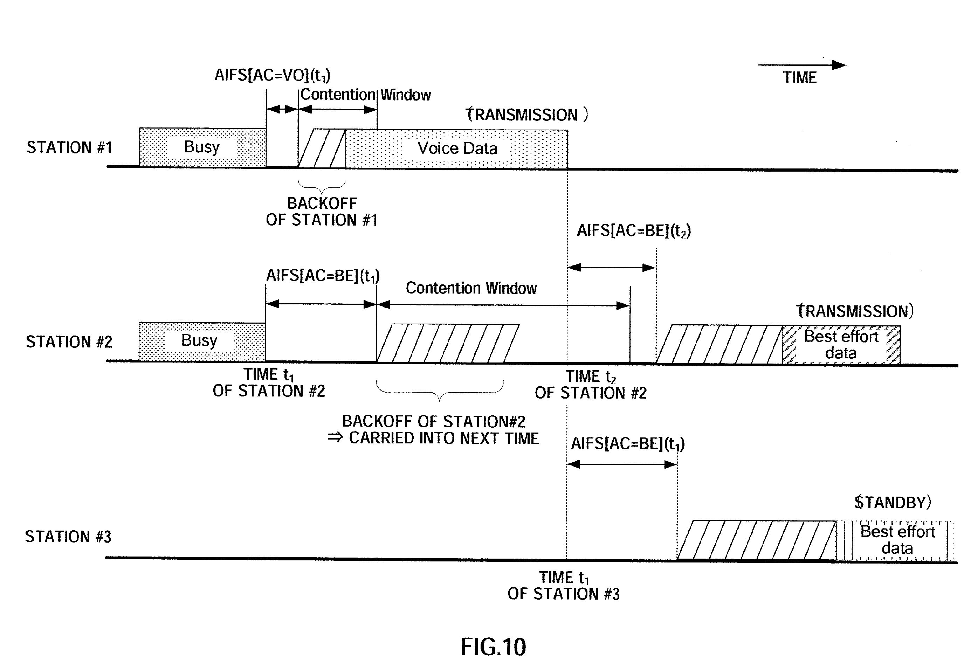

FIG.10 is a diagram for use in explanation of the operations of the station of FIG.6;

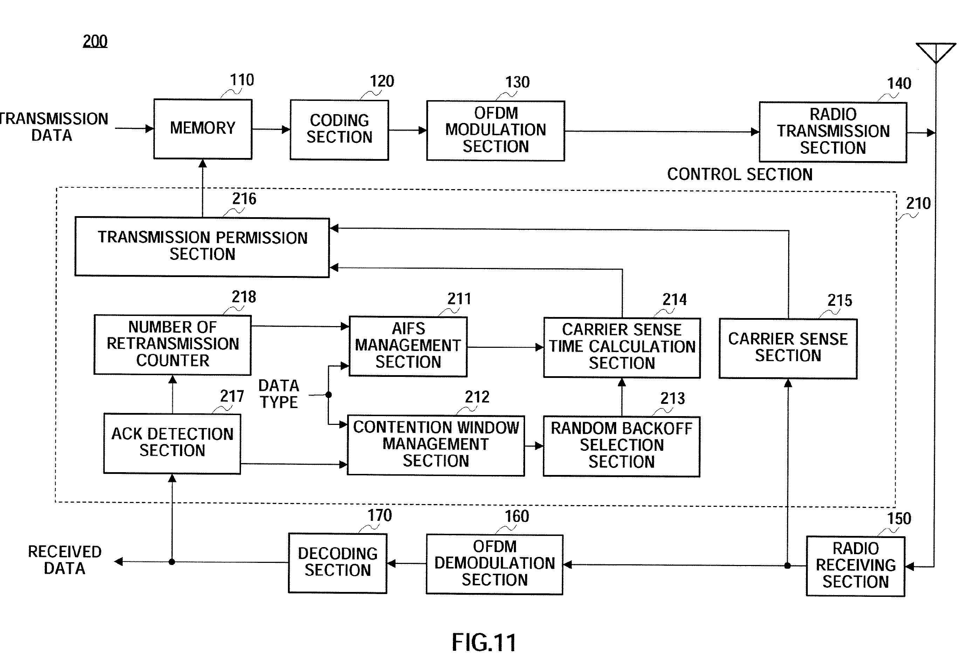

FIG.11 is a block diagram illustrating a configuration of a station according to Embodiment 2;

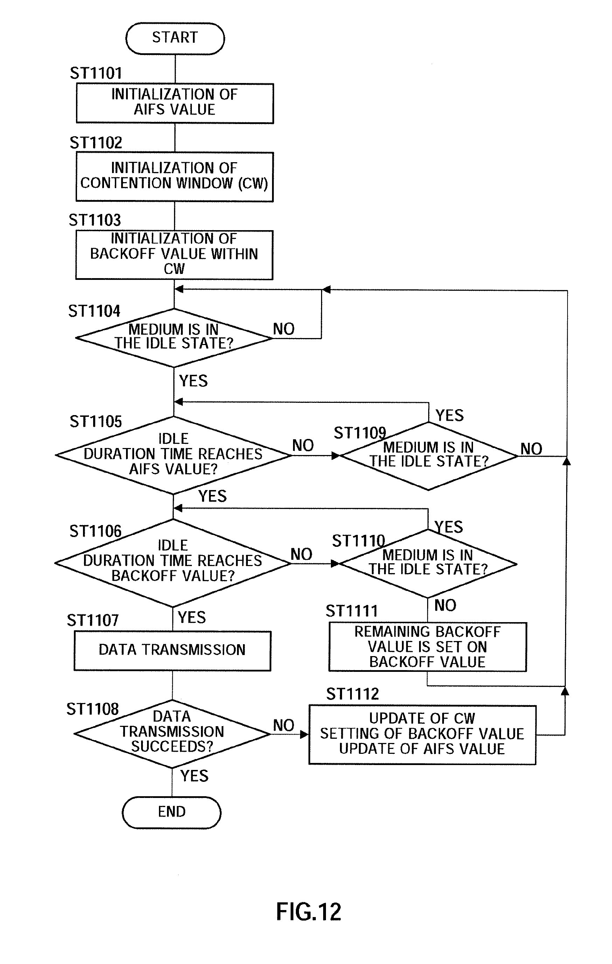

FIG.12 is a flow diagram to explain the operations of a control section of FIG.11;

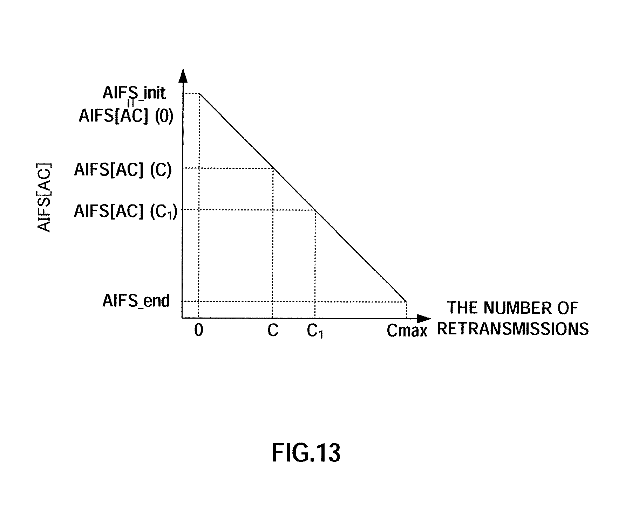

FIG.13 is a graph for use in explanation of a method of calculating an AIFS value in an AIFS management section of FIG.11;

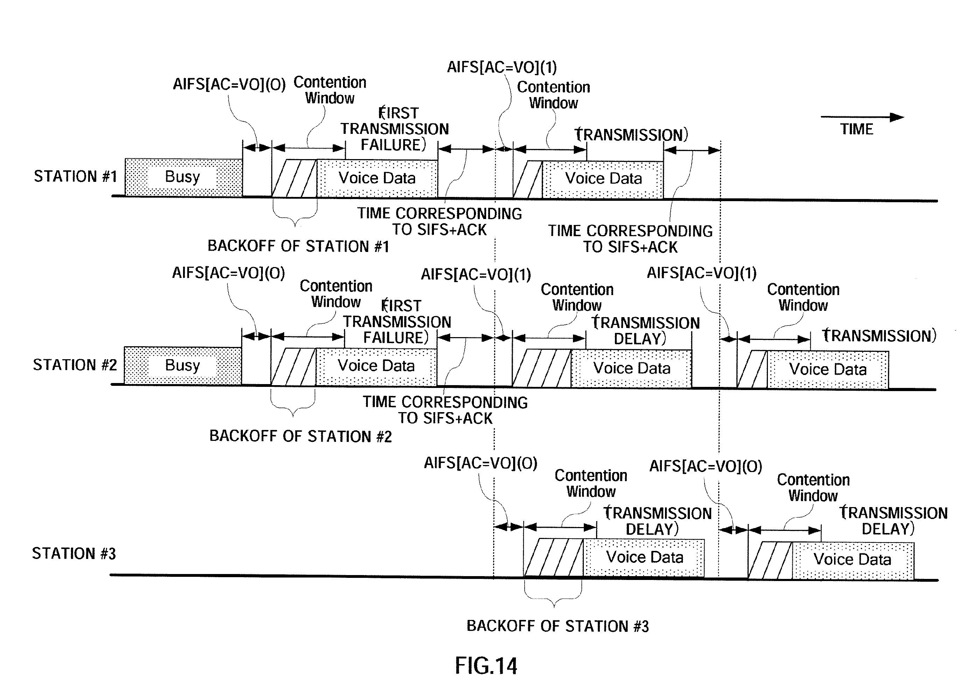

FIG.14 is a diagram for use in explanation of the operations of the station of FIG.11;

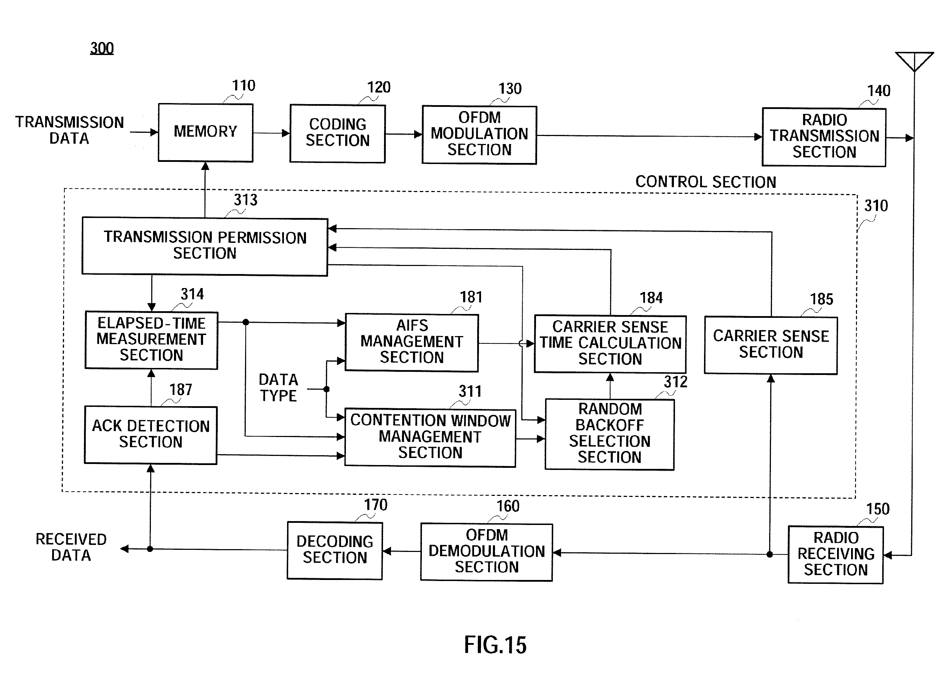

FIG.15 is a block diagram illustrating a configuration of a station according to Embodiment 3;

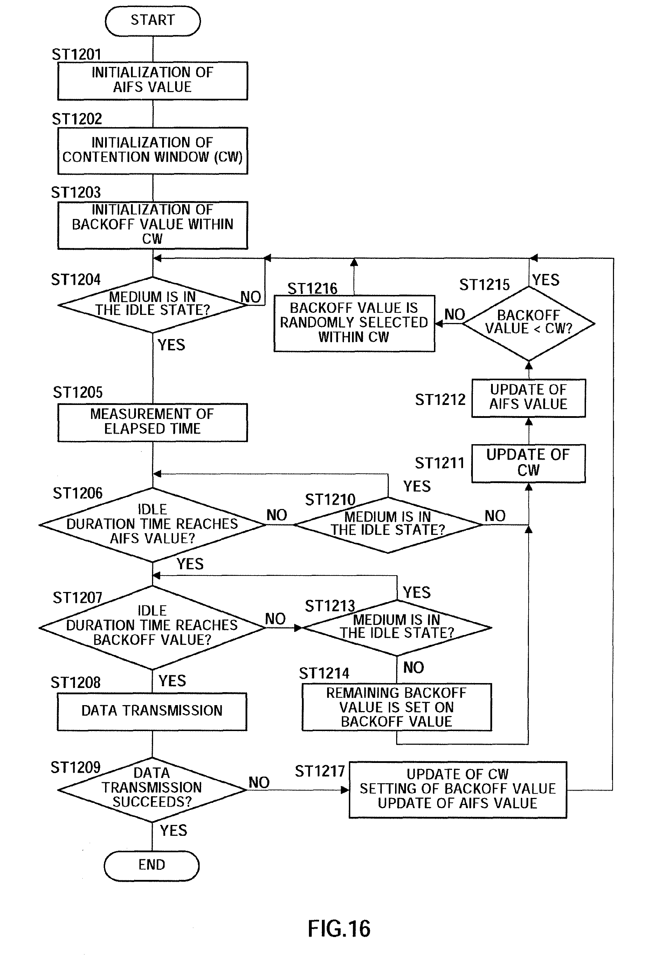

FIG.16 is a flow diagram to explain the operations of a control section of FIG.15;

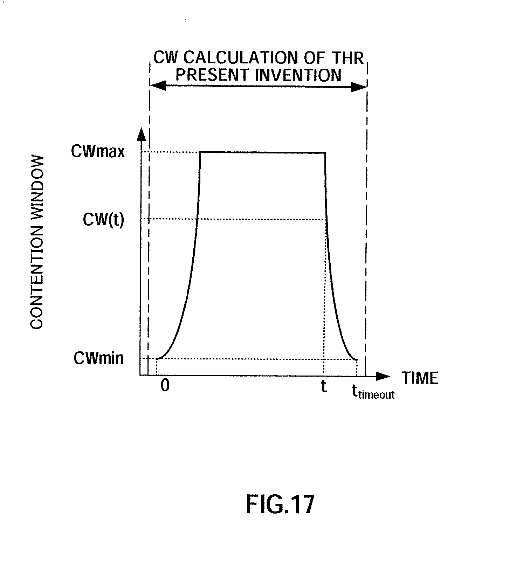

FIG.17 is a graph for use in explanation of a method of calculating a contention window in a contention window management section of FIG.15;

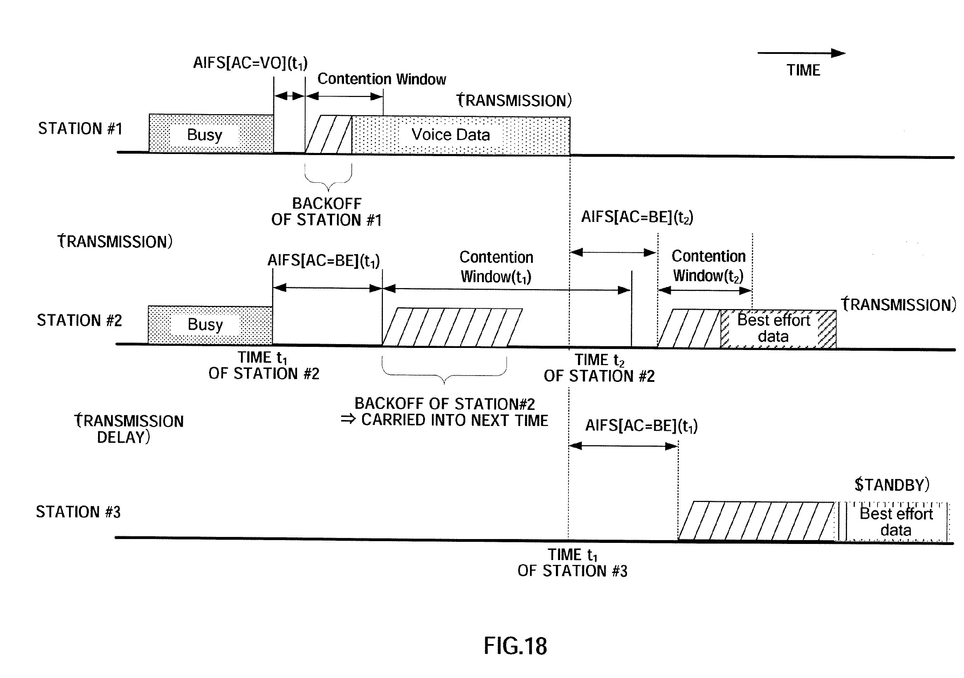

FIG.18 is a diagram for use in explanation of the operations of the station of FIG.15;

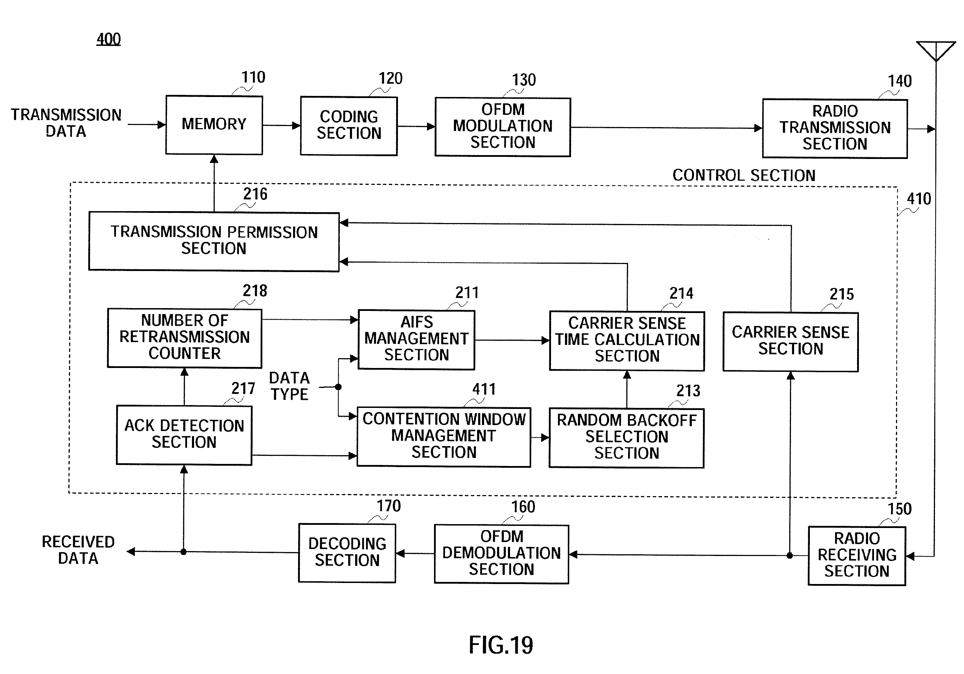

FIG.19 is a block diagram illustrating a configuration of a station according to Embodiment 4;

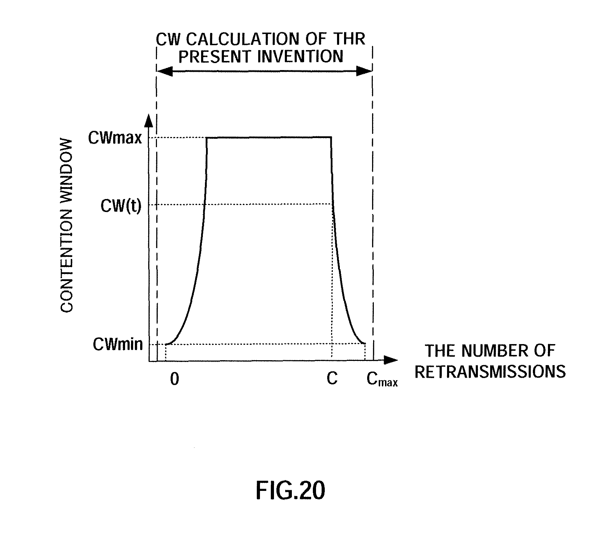

FIG.20 is a graph for use in explanation of a method of calculating a contention window in a contention window management section of FIG.19;

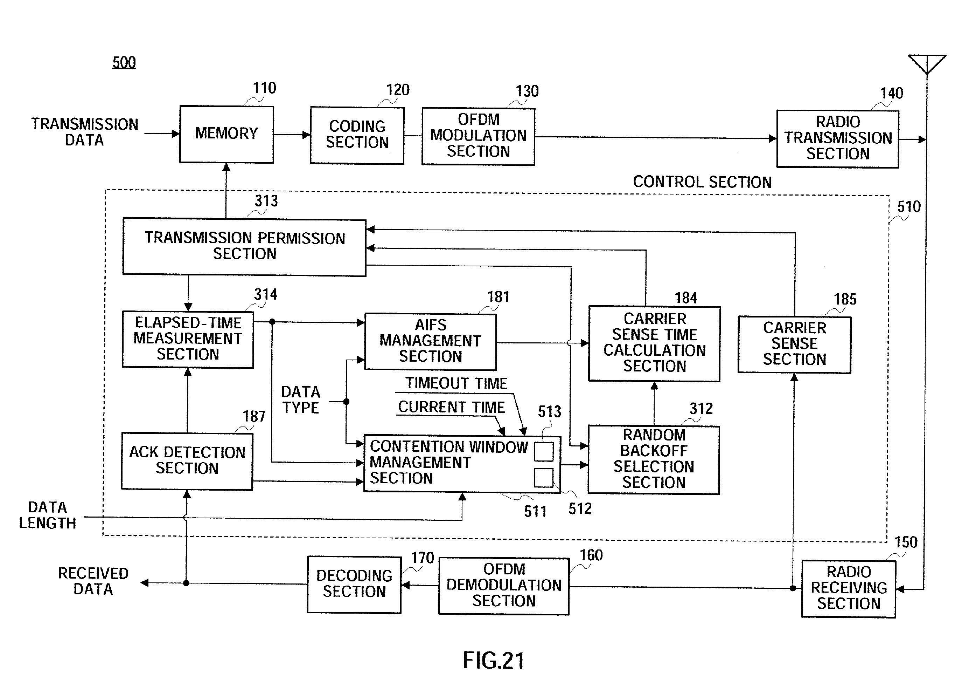

FIG.21 is a block diagram illustrating a configuration of a station according to Embodiment 5; and

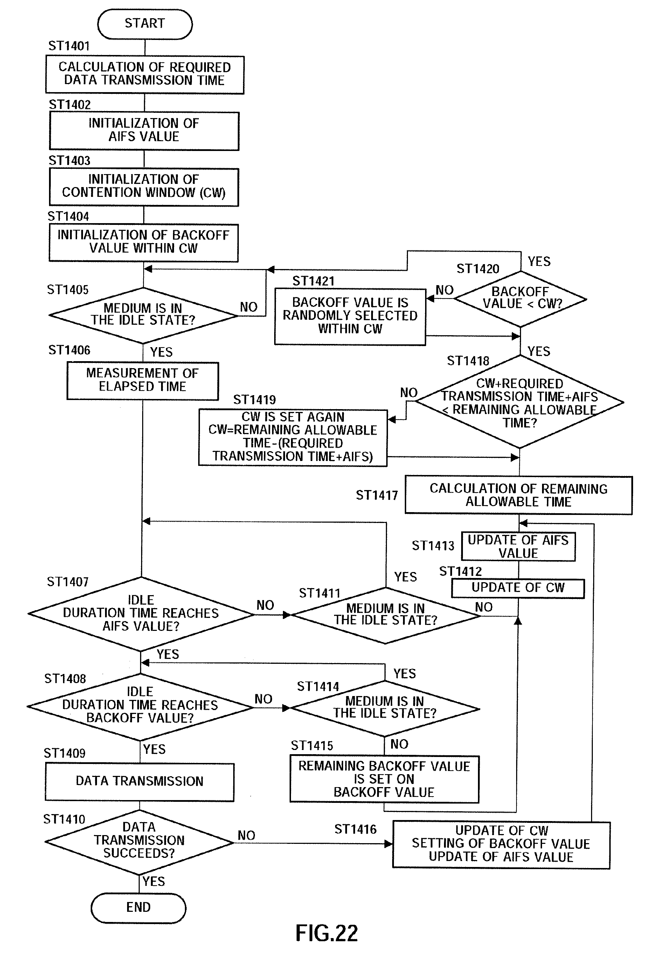

FIG.22 is a flow diagram to explain the operations of a control section in FIG.21.

### Best Mode for Carrying Out the Invention

The embodiments of the present invention relate to a station and access point in a wireless LAN system to which the CSMA/CA is applied as the access scheme. Since the station and the access point have the same configuration, explanations will be given to only the station.

Embodiments of the present invention will be described in detail below with reference to the accompanying drawings. In the embodiments, the same components are assigned the same codes, and their descriptions will be omitted to avoid redundancy.

### (Embodiment 1)

First, a configuration of a station according to this embodiment will be described.

As shown in FIG.6, station 100 has: memory 110; coding section 120; OFDM modulation section 130; radio transmission section 140; radio receiving section 150; OFDM demodulation section 160; decoding section 170; and control section 180.

Memory 110 stores input transmission data, and, according to a transmission permission instruction input from control section 180, outputs the transmission data corresponding to the transmission permission signal as the transmission signal.

Coding section 120 performs appropriate error correcting coding on the output signal from memory 110, and outputs the coded transmission signal to OFDM modulation section 130.

OFDM modulation section 130 performs signal processing necessary for OFDM transmission such as interleaving, IFFT and the like on the coded transmission signal, and outputs the OFDM modulated transmission signal to radio transmission section 140.

Radio transmission section 140 transmits the OFDM modulated transmission signal via an antenna.

Radio receiving section 150 receives a received signal via the antenna, performs RF processing on the received signal, and outputs the RF processed received signal to OFDM demodulation section 160 and control section 180.

OFDM demodulation section 160 performs received signal processing necessary for receiving the OFDM signal such as FFT, deinterleaving and the like on the RF processed received signal, and outputs the OFDM demodulated received signal to decoding section 170.

Decoding section 170 performs appropriate error correcting decoding on the OFDM demodulated received signal, and outputs received data to control section 180 and so on.

Control section 180 performs transmission control of the transmission signal based on the input RF processed received signal, the input received data, and the input data type of the transmission data.

More specifically, control section 180 has: AIFS management section 181; contention window management section 182; random backoff selection section 183; carrier sense time calculation section 184; carrier sense section 185; transmission permission section 186; ACK detection section 187, and elapsed-time measurement section 188.

When transmission data is generated, first, a "data type" of the transmission data is input to AIFS management section 181 and contention window management section 182. This "data type" is a parameter representing a priority as shown in FIG.5.

AIFS management section 181 controls an AIFS value, and an initial value of this AIFS value is set based on the data type. Further, AIFS management section 181 receives elapsed-time information measured in elapsed-time measurement section 188 as an input, and, according to the elapsed-time information, calculates an AIFS value. This AIFS value is input to carrier sense time calculation section 184. A method of calculating the AIFS value will be described later.

Contention window management section 182 controls a contention window size, and an initial value of this contention window size is determined based on the data type. Further, contention window management section 182 receives reception success/failure information input from ACK detection section 187 as an input, counts the number of times (this number means the number of retransmissions) the information indicating a reception failure on the receiving side is received per transmission signal, and determines the contention window size in accordance with the data type of the transmission signal and the number of retransmissions. When the reception success/failure information indicating a success of reception is input, contention window management section 182 resets the contention window size to the initial value. Then, the determined contention window size is output to random backoff selection section 183.

Random backoff selection section 183 sets a backoff value randomly within a range of the contention window size. This backoff value is input to carrier sense time calculation section 184.

Carrier sense time calculation section 184 obtains the sum of the AIFS value from AIFS management section 181 and the backoff value from random backoff selection section 183, and calculates a carrier sense time (the unit is a time slot or the like) . Then, carrier sense time calculation section 184 outputs the AIFS value, the backoff value, and the carrier sense time to transmission permission section 186.

Carrier sense section 185 performs the carrier sense--that is, detects whether or not another station or access point performs communication--using the output signal from radio receiving section 150. Then, carrier sense section 185 outputs the detection result (carrier sense result) to transmission permission section 186.

Transmission permission section 186 receives the carrier sense result input from carrier sense section 185. When a transmission signal of another station is not detected within the carrier sense time calculated in carrier sense time calculation section 184, since station 100 is able to transmit a transmission signal, transmission permission section 186 outputs a transmission permission signal to memory 110. Further, transmission permission section 186 outputs a time the medium next becomes idle (which is recognized by beforehand learning a data length of the another station or detecting in station 100 that the medium is in the idle state) to elapsed-time measurement section 188.

ACK detection section 187 determines a reception status of the previously transmitted transmission signal i.e. whether the receiving side was able to receive the signal correctly, based on whether an ACK frame to be contained in the received data output from decoding section 170 is received or not. Then, ACK detection section 187 outputs the determination result to contention window management section 182 and elapsed-time measurement section 188 as reception success/failure information.

Elapsed-time measurement section 188 receives the time when the medium is accessed next time as an input from transmission permission section 186. Further, elapsed-time measurement section 188 receives the reception success/failure information of the transmission signal input as an input from ACK detection section 187. When the reception success/failure information indicates a success in receiving the transmission signal, elapsed-time measurement section 188 outputs a reset signal to AIFS management section 181 so as to initialize the AIFS value. Meanwhile, when the reception success/failure information indicates a failure of reception of the transmission signal, elapsed-time measurement section 188 outputs the elapsed time from generation of the transmission data to AIFS management section 181.

Next, the operations of control section 180 will be described below with reference to FIG.7.

First, in step ST1001, when transmission data is generated, AIFS management section 181 sets an AIFS value in accordance with a type of the transmission data.

In steps ST1002 and ST1003, contention window management section 182 sets a contention window (CW) defined by the data type, and random backoff selection section 183 sets a backoff value randomly within a range of the CW.

Further, in step ST1004, based on a carrier sense result from carrier sense section 185, transmission permission section 186 confirms whether the medium is in the idle state or not.

When the confirmation result indicates that the medium is in the idle state (step ST1004: YES), elapsed-time measurement section 188 stores a time (t1) at that time based on the control signal from transmission permission section 186, and measures an elapsed time from this time (step ST1005). When confirming that the medium is in the busy state (step ST1004: NO), control section 180 waits for the medium to be idle.

In step ST1006, transmission permission section 186 starts measuring a duration time during which the medium is in the idle state, and determines whether the idle duration time reaches the set AIFS value.

As the determination result , when the idle duration time reaches the set AIFS value (step ST1006: YES), transmission permission section 186 determines whether the idle duration time reaches the set backoff value (step ST1007).

As the determination result, when the idle duration time reaches the backoff value (step ST1007: YES), transmission permission section 186 outputs a transmission permission signal to memory 110 and controls transmission processing of the transmission signal (step ST1008).

When the transmission signal transmitted in step ST1008 is correctly received on the receiving side (step ST1009: YES), the transmission processing on this transmission signal ends.

As the determination result in step ST1006, when the idle duration time does not reach the set AIFS value (step ST1006: NO), transmission permission section 186 determines whether or not the medium is in the idle state (step ST1010).

As the determination result, when the medium is in the idle state (step ST1010: YES), transmission permission section 186 returns to step ST1006, and determines whether the idle duration time being measured reaches the set AIFS value.

As the determination result, when the medium is in the busy state (step ST1010: NO), transmission permission section 186 outputs a command signal to output the elapsed-time information to elapsed-time measurement section 188, and based on the elapsed-time information (elapsed time from the time t1) from elapsed-time measurement section 188, AIFS management section 181 updates the AIFS value (step ST1011).

As the determination result in step ST1007, when the idle duration time does not reach the backoff value (step ST1007: NO), transmission permission section 186 determines whether or not the medium is in the idle state (step ST1012).

As the determination result, when the medium is in the idle state (step ST1012: YES), transmission permission section 186 returns to step ST1007, and determines whether the idle duration time being measured reaches the set backoff value.

As the determination result, when the medium is in the busy state (step ST1012: NO), the backoff value is set at a remaining backoff value, that is, a value obtained by subtracting from the set backoff value a time from a start of the backoff till the busy state of the medium after an end of the AIFS (step ST1013). This backoff value (the above-mentioned remaining time) is subsequently used as a backoff value when the idle duration time reaches the AIFS value (that is, next transmission) . Further, transmission permission section 186 outputs a command signal to output the elapsed-time information to elapsed-time measurement section 188, and, based on the elapsed-time information (elapsed time from the time t1) from elapsed-time measurement section 188, AIFS management section 181 updates the AIFS value (step ST1011).

When the transmission signal transmitted in step ST1008 is not correctly received on the receiving side --that is, when ACK is not returned from the receiving side and the elapsed-time information is output from elapsed-time measurement section 188 (step ST1009: NO)-AIFS management section 181 updates the AIFS value based on the elapsed-time information, contention window management section 182 updates the CW in accordance with the number of retransmissions, and random backoff selection section 183 determines a random backoff value (step ST1014).

Next, the method of calculating an AIFS value in AIFS management section 181 will be described with reference to FIG.8..

AIFS management section 181 sets an AIFS value at a smaller value in accordance with the "elapsed time" in updating the AIFS value.

More specifically, AIFS management section 181 calculates AIFS(AIFS_t) at each time from the data generation time, timeout interval, and the AIFS initial value and the shortest AIFS value of the data by linear interpolation. The AIFS initial value (AIFS_init), timeout time (ttimeout), and the shortest AIFS value, namely, AIFS end value (AIFS_end) in the timeout time are determined per type of transmission data.

As shown in FIG.8, the relationship between the AIFS value and elapsed time t in this case is represented by a straight line connecting (t1, AIFS_init) and (ttimeout, AIFS_end) with the vertical axis representing the AIFS value and the horizontal axis representing the time. Therefore, when the elapsed time from t1 is determined, a single AIFS value associated with the elapsed time is determined.

Herein, although the AIFS value is calculated according to the elapsed time by linear interpolation, the present invention is not limited to this, and, as shown in FIG.9, the AIFS value may be set such that the AIFS value is constant up to some elapsed time, and decreases exponentially after the some elapsed time (time t in FIG.9). The point is that the AIFS value is only necessary to be decreased according to the elapsed time.

Next, the operations of station 100 with the above-mentioned configuration will be described with reference to FIG.10.

Station (STA) #1 and station (STA) #2 determining that the channels are in the idle state at time t1 in FIG.10, respectively, perform carrier sense corresponding to predetermined waiting time AIFS set according to the types of transmission data that stations #1 and #2 transmit. It is here assumed that the transmission data type of station #1 is AC VO (Access Category: Voice), and that the transmission data type of station #2 is AC_BE (Access Category: Best Effort). Then, here, the predetermined waiting time of station #1 is expressed by AIFS [AC=VO] (t1), and the predetermined waiting time of station #2 is expressed by AIFS[AC=BE](t1).

Then, station (STA) #1 and station (STA) #2 perform carrier sense for a period of AIFS[AC=VO](t1) and AIFS [AC=BE] (t1) respectively, and, when the medium is still idle at that point, further perform carrier sense as many as backoff randomly set within the CW.

In FIG.10, the transmission data of station #1 has a higher priority than station #2, the AIFS value smaller than station #2, and further the CW size smaller than station #2 regarding backoff, so that the possibility that a small backoff value is set is high, and the transmission data is preferentially transmitted.

Meanwhile, since access is postponed by transmission of station #1, station #2 performs control the AIFS value (AIFS[AC=BE](t2)) of next carrier sense time (time t2) to decrease corresponding to the elapsed time (elapsed time from the time t1). In other words, AIFS[AC=BE](t2) is set smaller than AIFS[AC=BE](t1). This method of calculating the AIFS value corresponding to the elapsed time is the same as described above.

In this way, the data is preferentially transmitted from station #2, access of which is postponed, rather than from a station (station #3 in FIG.10) that newly transmits the data with approximately the same priority as station #2 at time t2. Further, when the transmission data of station #2 is further postponed in comparison with other transmission, the AIFS is set at a smaller value corresponding to the elapsed time, so that the possibility is high that the transmission data of station #2 is preferentially transmitted even when a station appears that newly transmits data with a priority higher than the transmission data of station #2.

Thus, according to this embodiment, station 100 is provided with transmission permission section 186 that controls transmission timing of transmission data from an AIFS value and backoff value, and more specifically, that controls transmission of transmission data when a medium is in the idle state after a lapse of predetermined waiting time obtained from an AIFS value determined by AIFS management section 181 and the backoff value, and AIFS management section 181 that adjusts the AIFS value regarding the transmission data in accordance with an elapsed time from the occurrence of a transmission request for the transmission data.

In this way, a small AIFS value can be set on transmission data with a long elapsed time from the occurrence of a transmission request for the transmission data, and the predetermined waiting time obtained from the AIFS value and backoff value is also set at a small value. Therefore, the possibility becomes high that the transmission data is preferentially transmitted rather than other transmission data, and it is thus possible to decrease the possibility that the transmission data is discarded by timeout. As the result, it is possible to improve the reliability and stability of communication.

### (Embodiment 2)

It is a feature of a station of Embodiment 2 that an AIFS value is set in accordance with "the number of retransmissions," in contrast to station 100 of Embodiment 1 setting an AIFS value corresponding to the "elapsed time."

As shown in FIG.11, station 200 has control section 210. This control section 210 performs transmission control of a transmission signal based on the input RF processed received signal, input received data, and input data type of transmission data.

More specifically, control section 210 has: AIFS management section 211; contention window management section 212; random backoff selection section 213; carrier sense time calculation section 214; carrier sense section 215; transmission permission section 216; ACK detection section 217; and number-of-retransmission counter 218.

When transmission data is generated, first, a "data type" of the transmission data is input to AIFS management section 211 and contention window management section 212.

AIFS management section 211 controls anAIFS value, and an initial value of this AIFS value is set based on the data type. Further, AIFS management section 211 calculates an AIFS value in accordance with the number of retransmissions input from number-of-retransmission counter 218. This AIFS value is input to carrier sense time calculation section 214. Further, when receiving an AIFS reset signal from number-of-retransmission counter 218, AIFS management section 211 performs processing of resetting the AIFS value to the initial value. A method of calculating the AIFS value will be described later.

Contention window management section 212 controls a contention window size, and an initial value of this contention window size is determined based on the data type. Further, contention window management section 212 receives reception success/failure information input from ACK detection section 217 as an input, counts the number of times (this number means the number of retransmissions) the information indicating a failure of reception on the receiving side is received per transmission signal, and determines a contention window size in accordance with the data type and the number of retransmissions. When the reception success/failure information indicating a success of reception is input, contention window management section 212 resets the contention window size to the initial value. Then, the determined contention window size is output to random backoff selection section 213.

Randombackoff selection section 213 sets a random backoff value within a range of the contention window size. This random backoff value is input to carrier sense time calculation section 214.

Carrier sense calculating section 214 obtains the sum of the AIFS value from AIFS management section 211 and the backoff value from random backoff selection section 213, and calculates a carrier sense time. Then, carrier sense time calculation section 214 outputs the AIFS value, backoff value, and carrier sense time to transmission permission section 216.

Using an output signal from radio receiving section 150, carrier sense section 215 performs carrier sense. Then, carrier sense section 215 outputs the carrier sense result to transmission permission section 216.

Transmission permission section 216 receives the carrier sense result input from carrier sense section 215 as an input. When a transmission signal of another station is not detected within the carrier sense time calculated in carrier sense time calculation section 214, since station 200 is able to transmit a transmission signal, permission/non-permission determining section 216 outputs a transmission permission signal to memory 110.

ACK detection section 217 determines a reception status of the previously transmitted transmission signal--that is, whether the receiving side was able to receive the signal correctly--based on whether or not an ACK frame contained in the received data output from decoding section 170 is received. Then, ACK detection section 217 outputs the determination result to contention window management section 212 and number-of-retransmission counter 218 as reception success/failure information.

When the reception success/failure information from ACK detection section 217 indicates a success of reception of the transmission signal, number-of-retransmission counter 218 resets the number-of-retransmission counter to zero, and outputs an AIFS reset signal to AIFS management section 211. Meanwhile, when the reception success/failure information from ACK detection section 217 indicates a failure of reception of the transmission signal, number-of-retransmission counter 218 increments the number-of-retransmission counter, and outputs a value of the incremented number of retransmissions to AIFS management section 211.

Next, the operations of control section 210 will be described with reference to FIG.12.

First, in step ST1101, when transmission data is generated, AIFS management section 211 sets an AIFS value in accordance with a type of the transmission data.

In steps ST1102 and ST1103, contention window management section 212 sets a contention window (CW) defined by the data type, and random backoff selection section 213 sets a backoff value randomly within a range of the CW.

Further, in step ST1104, based on a carrier sense result from carrier sense section 215, transmission permission section 216 confirms whether or not the medium is in the idle state.

When the confirmation result indicates that the medium is in the idle state (step ST1104: YES), transmission permission section 216 starts measuring a duration time during which the medium is in the idle state, and determines whether or not the idle duration time reaches the set AIFS value (step ST1105). When confirming that the medium is in the busy state (step ST1104: NO), control section 210 waits for the medium to be idle.

As the determination result, when the idle duration time reaches the set AIFS value (step ST1105: YES), transmission permission section 216 determines whether or not the idle duration time reaches the set backoff value (step ST1106).

As the determination result, when the idle duration time reaches the backoff value (step ST1106: YES), transmission permission section 216 outputs a transmission permission signal to memory 110 so as to control transmission processing of the transmission signal (step ST1107).

When the transmission signal transmitted in step ST1107 is correctly received on the receiving side (step ST1108: YES), the transmission processing on this transmission signal ends.

As the determination result in step ST1105, when the idle duration time does not reach the set AIFS value (step ST1105: NO), transmission permission section 216 determines whether or not the medium is in the idle state (step ST1109).

As the determination result, when the medium is in the idle state (step ST1109: YES), the processing returns to step ST1105, and transmission permission section 216 determines whether or not the idle duration time being measured reaches the set AIFS value.

As the determination result, when the medium is in the busy state (stepST1109: NO), the processing returns to step ST1104.

As the determination result in step ST1106, when the idle duration time does not reach the backoff value (step ST1106: NO), transmission permission section 216 determines whether or not the medium is in the idle state (step ST1110).

As the determination result, when the medium is in the idle state (step ST1110: YES), the processing returns to step ST1106, and transmission permission section 216 determines whether or not the idle duration time being measured reaches the set backoff value.

As the determination result, when the medium is in the busy state (step ST1110: NO), the backoff value is set at a remaining backoff value, that is, a value obtained by subtracting from the already set backoff value a time from a start of the backoff till the busy state of the medium after an end of the AIFS (step ST1111). This backoff value (the above-mentioned remaining time) is subsequently used as a backoff value when the idle duration time reaches the AIFS value.

When the transmission signal transmitted in step ST1107 is not correctly received on the receiving side -that is, when ACK is not returned from the receiving side and a value of the number of retransmissions is output from number-of-retransmission counter 218 (step ST1108: NO), AIFS management section 211 updates the AIFS value based on the number of retransmissions, contention window management section 212 updates the CW in accordance with the number of retransmissions, and random backoff selection section 213 determines a random backoff value (step ST1112).

Next, the method of calculating an AIFS value in AIFS management section 211 will be described with reference to FIG.13.

AIFS management section 211 sets an AIFS value at a smaller value in accordance with "the number of retransmissions" in updating the AIFS value.
In other words, as the number of retransmissions approaches the maximum number of retransmissions, the AIFS value is set at a smaller value.

More specifically, AIFS management section 211 calculates AIFS (AIFS_C) at each number of retransmissions from the AIFS initial value when data transmission is first made (that is, the number of retransmissions=0) and the AIFS value in the maximum number of retransmissions Cmax by linear interpolation. The AIFS initial value (AIFS_init), the maximum number of retransmissions Cmax, and AIFS end value (AIFS_end) in the maximum number of retransmissions Cmax are pre-defined per type of transmission data.

As shown in FIG.13, the relationship between the AIFS value and the number of retransmissions C is represented by a straight line connecting (0, AIFS_init) and (Cmax, AIFS_end) with the vertical axis representing the AIFS value and the horizontal axis representing the number of retransmissions. Therefore, when the number of retransmissions is determined, a single AIFS value corresponding to the number of retransmissions is determined. In other words, the AIFS value is decreased in accordance with the number of retransmissions.

Next, the operations of station 200 with the above-mentioned configuration will be described with reference to FIG.14.

Station (STA) #1 and station (STA) #2 determining that the channels are in the idle state in FIG.14 perform carrier sense corresponding to predetermined waiting time AIFS set according to the types of transmission data that stations #1 and #2 transmit. It is assumed that transmission data types of station #1 and station #2 are both AC_VO (Access Category: Voice). Then, since transmission of stations #1 and #2 is first transmission, the predetermined waiting time of stations #1 and #2 is expressed by AIFS[AC=VO](0).

Then, stations #1 and #2 perform carrier sense for a period of AIFS[AC=VO](0), and when the medium is still idle at that point, further performs carrier sense as many as backoff randomly set within the CW. It is here assumed that the backoff values of stations #1 and #2 are the same.

In this case, stations #1 and #2 start data transmission at the same time, a collision occurs and the data cannot be received correctly on the receiving side. Therefore, stations #1 and #2 retransmit the same data respectively, and since the number of retransmissions is one, the AIFS value set at this point is AIFS[AC=VO](1) smaller than AIFS[AC=VO](0).

Then, stations #1 and #2 set the backoff value again. It is here assumed that the backoff value of station #1 is set at a smaller value than the backoff value of station #2. Therefore, the data of station #1 is transmitted preferentially rather than the data of station #2.

Further, around the same time as trials of retransmissions by stations #1 and #2, station #3 tries to perform first data transmission. The AIFS value of station #3 is AIFS[AC=VO] (0), the contention window size is also larger than stations #1 and #2 with the larger number of retransmissions, and the probability is high that the transmission is delayed.

When the data of station #1 is transmitted, stations #2 and #3 perform carrier sense corresponding to the AIFS value+backoff value, and in this embodiment, the control is performed such that the AIFS value is made smaller in accordance with the number of retransmissions. In other words, AIFS[AC=VO] (1) is set smaller than AIFS[AC=VO](0). This method of calculating the AIFS value in accordance with the number of retransmissions is the same as described above.

In this way, the data is preferentially transmitted from station #2 with the larger number of retransmissions, rather than from a station (station #3 in FIG.14) that newly transmits the data with approximately the same priority as station #2 at time t2. Further, when the transmission data of station #2 collides with another transmission and the number of retransmissions is further increased, the AIFS is set at a smaller value in accordance with the number of retransmissions, the possibility is high that the transmission data of station #2 is preferentially transmitted even when a station appears that newly transmits data with a priority higher than the transmission data of station #2.

Thus, according to this embodiment, station 200 is provided with transmission permission section 216 that controls transmission timing of transmission data from an AIFS value and backoff value, and more specifically, that controls transmission of transmission data when a medium is in the idle state after a lapse of predetermined waiting time obtained from an AIFS value determined by AIFS management section 211 and the backoff value, and AIFS management section 211 that adjusts the AIFS value on the transmission data in accordance with the number of retransmissions of the transmission data.

In this way, a small AIFS value can be set on transmission data with the large number of retransmissions, and the predetermined waiting time obtained from the AIFS value and the backoff value is also set at a small value. Therefore, the possibility becomes high that the transmission data is preferentially transmitted rather than other transmission data, and it is thus possible to decrease the possibility of discarding the transmission data with the large number of retransmissions, that is, the transmission data presumed to have a short remaining time before timeout, by timeout. As the result, it is possible to improve the reliability and stability of communication.

### (Embodiment 3)

It is a feature of a station of Embodiment 3 that the station sets a contention window size in accordance with the "elapsed time" and the number of retransmissions, in contrast to station 1 of Embodiment 1 setting an AIFS value in accordance with the "elapsed time" and further setting a contention window size in accordance with only the number of retransmissions.

As shown in FIG.15, station 300 has control section 310. This control section 310 performs transmission control of a transmission signal based on the input RF processed received signal, the input received data, and the input data type of transmission data.

More specifically, control section 310 has contention window management section 311, random backoff selection section 312, transmission permission section 313, and elapsed-time measurement section 314.

When transmission data is generated, first, a "data type" of the transmission data is input to AIFS management section 181 and contention window management section 311.

Contention window management section 311 controls a contention window size, and an initial value of the contention window size is determined based on the data type. Further, as in contention window management section 182, contention window management section 311 receives reception success/failure information input from ACK detection section 187 as an input, counts the number of times (this number means the number of retransmissions) the information indicating a failure of reception on the receiving side is received per transmission signal, and determines a contention window size in accordance with the data type and the number of retransmissions. However, unlike contention window management section 182, contention window management section 311 performs control to make the contention window size smaller in accordance with elapsed-time information received from elapsed-time measurement section 314. More specifically, the contention window size is conventionally constant when the number of retransmissions is a predetermined value or more, and contention window management section 311 performs control to decrease the contention window size when the elapsed-time exceeds the predetermined time. This method of obtaining a contention window size will be described later.

Random backoff selection section 312 basically sets a random backoff value within a range of the contention window size determined by contention window management section 311. Further, in a predetermined case, random backoff selection section 312 determines whether or not the backoff value set in transmission permission section 313 is smaller than the contention window updated in contention window management section 311, and when determining that the backoff value is larger than the contention window as the determination result, sets a random backoff value within a range of the updated contention window.

Transmission permission section 313 receives the carrier sense result as an input from carrier sense section 185. When a transmission signal of another station is not detected within the carrier sense time calculated in carrier sense time calculation section 184, station 300 is able to transmit a transmission signal, so that permission/non-permission determining section 313 outputs a transmission permission signal to memory 110. Meanwhile, when a signal of another station is detected during the carrier sense, transmission permission section 313 outputs a time the medium becomes idle next time (which is recognized by beforehand learning a data length of the another station or detecting the medium in the idle state in station 300) to elapsed-time measurement section 314.

Elapsed-time measurement section 314 receives the time the medium is accessed next time as an input from transmission permission section 313. Further, elapsed-time measurement section 314 receives the reception success/failure information of the transmission signal from ACK detection section 187. When the reception success/failure information indicates a success of reception of the transmission signal, elapsed-time measurement section 314 outputs a reset signal to AIFS management section 181 to initialize the AIFS value and outputs a reset signal to contention window management section 311 to initialize the contention window. Meanwhile, when the reception success/failure information indicates a failure of reception of the transmission signal, elapsed-time measurement section 314 outputs the elapsed time from generation of the transmission data to AIFS management section 181 and contention window management section 311.

Next, the operations of control section 310 will be described with reference to FIG.16.

First, in step ST1201, when transmission data is generated, AIFS management section 181 sets an AIFS value in accordance with a type of the transmission data.

In steps ST1202 and ST1203, contention window management section 311 sets a contention window (CW) defined by the data type, and random backoff selection section 312 sets a backoff value randomly within a range of the CW.

Further, in step ST1204, based on a carrier sense result from carrier sense section 185, transmission permission section 313 confirms whether or not the medium is in the idle state.

When the confirmation result indicates that the medium is in the idle state (step ST1204: YES), elapsed-time measurement section 314 stores a time (t1) at that point, and measures an elapsed time from this point (step ST1205). When confirming that the medium is in the busy state (step ST1204: NO), control section 310 waits for the medium to be idle.

In step ST1206, transmission permission section 313 starts measuring a duration time during which the medium is in the idle state, and determines whether or not the idle duration time reaches the set AIFS value.

As the determination result, when the idle duration time reaches the set AIFS value (step ST1206: YES), transmission permission section 313 determines whether or not the idle duration time reaches the set backoff value (step ST1207).

As the determination result, when the idle duration time reaches the backoff value (step ST1207: YES), transmission permission section 313 outputs a transmission permission signal to memory 110 and controls transmission processing of the transmission signal (step ST1208) .

When the transmission signal transmitted in step ST1208 is correctly received on the receiving side (step ST1209: YES), the transmission processing on this transmission signal ends.

As the determination result in step ST1206, when the idle duration time does not reach the set AIFS value (step ST1206: NO), transmission permission section 313 determines whether or not the medium is in the idle state (step ST1210).

As the determination result, when the medium is in the idle state (step ST1210: YES), the processing returns to step ST1206, and transmission permission section 313 determines whether the idle duration time being measured reaches the set AIFS value.

As the determination result, when the medium is in the busy state (step ST1210: NO), transmission permission section 313 outputs a command signal for outputting the elapsed-time information to elapsed-time measurement section 314, and contention window management section 311 updates the contention window based on the elapsed-time information (elapsed time from the time t1) from elapsed-time measurement section 314 and the number of retransmissions (step ST1211),and AIFS management section 181 updates the AIFS value based on the elapsed-time information from elapsed-time measurement section 314(step ST1212).

As the determination result in step ST1207, when the idle duration time does not reach the backoff value (step ST1207: NO), transmission permission section 313 determines whether or not the medium is in the idle state (step ST1213).

As the determination result, when the medium is in the idle state (step ST1213: YES), the processing returns to step ST1207, and transmission permission section 313 determines whether or not the idle duration time being measured reaches the set backoff value.

As the determination result, when the medium is in the busy state (step ST1213: NO), transmission permission section 313 sets the backoff value at a remaining backoff value, that is, a value obtained by subtracting from the already set backoff value a time from a start of the backoff till the busy state of the medium after an end of the AIFS (step ST1214). This backoff value (the above-mentioned remaining time) is output to random backoff selection section 312. Further, transmission permission section 313 outputs a command signal for outputting the elapsed-time information to elapsed-time measurement section 314, contention window management section 311 updates the contention window (step ST1211) based on the elapsed-time information (elapsed time from the time t1) from elapsed-time measurement section 314 and the number of retransmissions, and AIFS management section 181 updates the AIFS value (step ST1212) based on the elapsed-time information from elapsed-time measurement section 314.

In step ST1215, random backoff selection section 312 determines whether or not the backoff value (that is, for a flow from step ST1210:NO, the backoff value set last time by random backoff selection section 312 in step ST1203 or in subsequent step ST1217, or for a flow from ST1214, the remaining backoff value output and set by transmission permission section 313 in step ST1214) set on transmission permission section 313 is smaller than the contention window updated in step ST1211.

As the determination result, when the backoff value set on transmission permission section 313 is smaller than the contention window updated in step ST1211 (step ST1215:YES), the processing returns to step ST1204.

As the determination result, when the backoff value set on transmission permission section 313 is the contention window updated in step ST1211 or more (step ST1215:NO), random backoff selection section 312 selects a backoff value randomly within the contention window updated in step ST1211 (step ST1216).

When the transmission signal transmitted in step ST1208 is not correctly received on the receiving side-that is, when ACK is not returned from the receiving side and the elapsed-time information is output from elapsed-time measurement section 314 (step ST1209: NO)-AIFS management section 181 updates the AIFS value based on the elapsed-time information, contention window management section 311 updates the CW in accordance with the number of retransmissions and the elapsed time, and randombackoff selection section 312 sets a randombackoff value (step ST1217).

Next, the method of calculating a contention window in contention window management section 311 with reference to FIG.17.

Contention window management section 311 sets a contention window at a smaller value in accordance with the "elapsed time" and the number of retransmissions in updating the CW.

More specifically, for example, as shown in FIG. 17, contention window management section 311 performs control to set a contention window in accordance with the number of retransmissions as in the conventional manner until the elapsed time is time t, and then, set the contention window at a smaller value in accordance with the "elapsed time" when the elapsed time exceeds time t.

Next, the operations of station 300 with the above-mentioned configuration will be described with reference to FIG.18.

Station (STA) #1 and station #2 determining that the channels are in the idle state at time t1 in FIG.18, respectively, perform carrier sense corresponding to predetermined waiting time AIFS set according to the types of transmission data stations #1 and #2 to transmit. It is here assumed that the transmission data type of station #1 is AC_VO (Access Category: Voice), and that the transmission data type of station #2 is AC_BE (Access Category: Best Effort). Then, here, the predetermined waiting time of station #1 is expressed by AIFS [AC=VO] (t1), and the predetermined waiting time of station #2 is expressed by AIFS[AC=BE](t1).

Then, station #1 and station #2 perform carrier sense for a period of AIFS [AC=VO] (t1) or AIFS [AC=BE] (t1), respectively, and, when the medium is still idle at that point, further perform carrier sense as many as backoff randomly set within the CW.

In FIG.18, the transmission data of station #1 has a high priority, the AIFS value smaller than station #2, and further the CW size smaller than station #2 regarding backoff, so that the possibility that a small backoff value is set is high, and the transmission data is preferentially transmitted.

Meanwhile, since access is postponed by transmission of station #1, station #2 performs control to decrease the AIFS value (AIFS [AC=BE] (t2)) of next carrier sense time (time t2) in accordance with the elapsed time (elapsed time from the time t1). In other words, AIFS[AC=BE](t2) is set smaller than AIFS [AC=BE](t1). This method of calculating the AIFS value in accordance with the elapsed time is the same as described above.

In this way, the same effect as in Embodiment 1 is obtained, and further, in this embodiment, such control is performed that the contention window size is decreased in accordance with the elapsed time irrespective of the number of retransmissions when the elapsed time exceeds a certain value.

Contention Window (t2) that is a contention window size at time t2 of station #2 in FIG.18 shows the contention window size when the elapsed time exceeds a certain value, and is set smaller than Contention Window (t1) that is a contention window size at time t1 before the elapsed time exceeds the certain value. In this way, the data is preferentially transmitted from station #2, access of which is postponed, rather than from data of a station (station #3 in FIG.18) that newly transmits the data with approximately the same priority as station #2 at time t2. Further, when the transmission data of station #2 is further postponed in comparison with other transmission, the AIFS and the contention window are set at smaller values in accordance with the elapsed time, so that the possibility is high that the transmission data of station #2 is preferentially transmitted even when a station appears that newly transmits data with a priority higher than the transmission data of station #2.

Thus, according to this embodiment, station 300 is provided with transmission permission section 313 that controls transmission timing of transmission data from an AIFS value and backoff value, and more specifically, that controls transmission of transmission data when a medium is in the idle state after a lapse of predetermined waiting time obtained from an AIFS value determined by AIFS management section 181 and the backoff value, AIFS management section 181 that adjusts the AIFS value regarding the transmission data in accordance with an elapsed time from the occurrence of a transmission request for the transmission data, and further, contention window management section 311 that adjusts the size of a contention window that defines a range that the backoff value is able to take in accordance with the elapsed time.

In this way, for transmission data with a long elapsed time from the occurrence of a transmission request for the transmission data, it is possible not only to set a small AIFS value but also to set the size of a contention window in a range that the backoff value is able to take at a small value, thereby setting predetermined waiting time obtained from the AIFS value and the backoff value at a small value as well. Therefore, the possibility becomes high that the transmission data is preferentially transmitted rather than other transmission data, and it is thus possible to decrease the possibility that the transmission data is discarded by timeout. As the result, it is possible to improve the reliability and stability of communication.

### (Embodiment 4)

It is a feature of a station of Embodiment 4 that the station sets not only an AIFS value but also a contention size window in accordance with "the number of retransmissions," and more specifically, sets the contention window at a smaller value when the number of retransmissions exceeds a certain number.
Conventionally, the contention window size is designed to have a certain value when the number of retransmissions increases to some extent.

As shown in FIG.19, station 400 has control section 410. This control section 410 performs transmission control of a transmission signal based on an input RF processed received signal, input received data, and data type of transmission data.

More specifically, control section 410 has contention window management section 411.

When transmission data is generated, first, a "data type" of the transmission data is input to AIFS management section 211 and contention window management section 411.

Contention window management section 411 controls a contention window size, and an initial value of this contention window size is determined based on the data type. Further, contention window management section 411 receives reception success/failure information input from ACK detection section 217, counts the number of times (this number means the number of retransmissions) the information indicating a failure of reception on the receiving side is received per transmission signal, and determines a contention window size in accordance with the data type and the number of retransmissions. When the reception success/failure information indicating a success of reception is input, contention window management section 411 resets the contention window size to the initial value. Then, the determined contention window size is output to random backoff selection section 213.

Next, a method of calculating a contention window in contention window management section 411 will be described with reference to FIG.19.

Contention window management section 411 sets a contention window at a smaller value in accordance with the number of retransmissions in updating the CW when the number of retransmissions exceeds a predetermined number.

More specifically, for example, as shown in FIG.20, contention window management section 411 performs control to set a contention window as in the conventional manner until the number of retransmissions is the certain number C, and then, sets the contention window to be smaller in accordance with the number of retransmissions when the number of retransmissions exceeds the certain number C.

The operations of control section 410 are basically the same as the operations of control section 210 as shown in FIG.12, but are different in a respect that in updating the contention window in step ST1112, contention window management section 411 sets the contention window to be smaller in accordance with the number of retransmissions when the number of retransmissions exceeds the certain number C as described above.

Thus, according to this embodiment, station 400 is provided with transmission permission section 216 that controls transmission timing of transmission data from an AIFS value and backoff value, and more specifically, that controls transmission of transmission data when a medium is in the idle state after a lapse of predetermined waiting time obtained from an AIFS value determined by AIFS management section 211 and the backoff value, AIFS management section 211 that adjusts the AIFS value on the transmission data in accordance with the number of retransmissions of the transmission data, and further, contention window management section 411 that adjusts the contention window size that the backoff value is able to take to be smaller in accordance with the number of retransmissions when the number of retransmissions exceeds the predetermined number.

Although the number of retransmissions used in contention window management section 411 has been described to be counted by contention window management section 411, the present invention is not limited this, and contention window management section 411 may acquire the information regarding the number of retransmissions from number-of-retransmission counter 218. The point is that contention window management section 411 is only necessary to acquire the information of the number of retransmissions.

In this way, for transmission data with the large number of retransmissions, it is possible not only to set an AIFS value is set at a small value but also to set the size of a contention window of a range the backoff value is able to take at a small value, thereby setting the predetermined waiting time obtained from the AIFS value and the backoff value at a small value as well. Therefore, the possibility becomes high that the transmission data is preferentially transmitted rather than other transmission data, and it is thus possible to decrease the possibility of discarding the transmission data with the large number of retransmissions, that is, the transmission data presumed to have a short remaining time before timeout, by timeout. As the result, it is possible to improve the reliability and stability of communication.

### (Embodiment 5)

It is a feature of a station of Embodiment 5 that the station sets a contention window at a difference between a "remaining allowable time" and the sum of a "required transmission time" and an AIFS value when the sum of the contention window, "required transmission time" and AIFS is the "remaining allowable time" or more, in contrast to station 300 of Embodiment 3 setting a contention window size in accordance with the "elapsed time" and the number of retransmissions. By this means, it is prevented that a timeout occurs during data transmission and thus useless transmission is performed.

As shown in FIG.21, station 500 has control section 510. This control section 510 performs transmission control of a transmission signal based on the input RFprocessed received signal, the input received data, and data type of transmission data.

More specifically, control section 510 has contention window management section 511, and this contention window management section 511 has required transmission time calculating section 512 and remaining allowable time calculating section 513.

Required transmission time calculating section 512 calculates the "required transmission time" necessary for transmission, from a data length, modulation scheme, and coding scheme of the input transmission signal.

Remaining allowable time calculating section 513 takes a difference between the timeout time and the current time and calculates the "remaining allowable time" that is a remaining time up to the time-out time.

Contention window management section 511 controls a contention window size, and an initial value of the contention window size is determined based on the data type. Further, like in contention window management section 311, contention window management section 511 basically determines a contention window size in accordance with the data type and the number of retransmissions, and performs control to decrease the contention window size when the elapsed time exceeds a certain time. However, when the sum of the contention window, "required transmission time" and AIFS is the "remaining allowable time" or more, contention window management section 511 sets a contention window at a difference between the "remaining allowable time" and the sum of the "required transmission time" and AIFS value.

Next, the operations of control section 510 will be described with reference to FIG.22.

In step ST1401, when transmission data is generated, required transmission time calculating section 512 calculates the required transmission time necessary for transmission, from a data length, modulation scheme, and coding scheme of the input transmission signal.

In step ST1402, when transmission data is generated, AIFS management section 181 sets an AIFS value in accordance with a type of the transmission data.

In steps ST1403 and ST1404, contention window management section 511 sets a contention window (CW) defined by the data type, and random backoff selection section 312 sets a backoff value randomly within a range of the CW.

Further, in step ST1405, based on a carrier sense result from carrier sense section 185, transmission permission section 313 confirms whether or not the medium is in the idle state.

When the confirmation result indicates that the medium is in the idle state (step ST1405: YES), elapsed-time measurement section 314 stores a time (t1) at that point, and measures an elapsed time from this point (step ST1406). When confirming that the medium is in the busy state (step ST1405: NO), control section 510 waits for the medium to be idle.

In step ST1407, transmission permission section 313 starts measuring a duration time during which the medium is in the idle state, and determines whether or not the idle duration time reaches the set AIFS value.

As the determination result, when the idle duration time reaches the set AIFS value (step ST1407: YES), transmission permission section 313 determines whether the idle duration time reaches the set backoff value (step ST1408).

As the determination result, when the idle duration time reaches the backoff value (step ST1408: YES), transmission permission section 313 outputs a transmission permission signal to memory 110 and controls transmission processing of the transmission signal (step ST1409).

When the transmission signal transmitted in step ST1409 is correctly received on the receiving side (step ST1410: YES), the transmission processing on this transmission signal ends.

As the determination result in step ST1407, when the idle duration time does not reach the set AIFS value (step ST1407: NO), transmission permission section 313 determines whether or not the medium is in the idle state (step ST1411).

As the determination result, when the medium is in the idle state (step ST1411: YES), transmission permission section 313 returns to step ST1407, and determines whether or not the idle duration time being measured reaches the set AIFS value.

As the determination result, when the medium is in the busy state (step ST1411: NO), transmission permission section 313 outputs a command signal to output the elapsed-time information to elapsed-time measurement section 314, contention window management section 511 updates the contention window based on the elapsed-time information (elapsed time from the time t1) from elapsed-time measurement section 314 and the number of retransmissions(step ST1412), and AIFS management section 181 updates the AIFS value based on the elapsed-time information from elapsed-time measurement section 314(step ST1413).

As the determination result in step ST1408, when the idle duration time does not reach the backoff value (step ST1408: NO), transmission permission section 313 determines whether or not the medium is in the idle state (step ST1414).

As the determination result, when the medium is in the idle state (step ST1414: YES), the processing returns to step ST1408, and transmission permission section 313 determines whether or not the idle duration time being measured reaches the set backoff value.

As the determination result, when the medium is in the busy state (step ST1414: NO), transmission permission section 313 sets a backoff value for next transmission at a remaining backoff value, that is, a value obtained by subtracting from the already set backoff value a time from a start of the backoff till the busy state of the medium after an end of the AIFS (step ST1415). This backoff value (the above-mentioned remaining time) is output to random backoff selection section 312. Further, transmission permission section 313 outputs a command signal to output the elapsed-time information to elapsed-time measurement section 314, contention window management section 511 updates the contention window based on the elapsed-time information (elapsed time from the time t1) from elapsed-time measurement section 314 and the number of retransmissions (step ST1412), and AIFS management section 181 updates the AIFS value (step ST1413) based on the elapsed-time information from elapsed-time measurement section 314.

When the transmission signal transmitted in step ST1409 is not correctly received on the receiving side, that is, when ACK is not returned from the receiving side and the elapsed-time information is output from elapsed-time measurement section 314 (step ST1410: NO), AIFS management section 181 updates the AIFS value based on the elapsed-time information, contention window management section 511 updates the CW in accordance with the number of retransmissions and the elapsed time, and random backoff selection section 312 sets a randombackoff value (step ST1416).

In step ST1417, remaining allowable time calculating section 513 takes a difference between the timeout time and the current time and calculates the remaining allowable time that is a remaining time up to the time-out time.

In step ST1418, contention window management section 511 determines whether or not the sum of the contention window updated in step ST1412 or step ST1416, the AIFS value updated in step ST1413 or step ST1416 and the required transmission time calculated in step ST1401 is smaller than the remaining allowable time calculated in step ST1417.

As the determination result, when the sum of the updated contention window, the updated AIFS value and the required transmission time is the remaining allowable time or more (step ST1418: NO), contention window management section 511 sets the contention window again so that the contention window is a difference between the remaining allowable time and the sum of the required transmission time and the AIFS value (step ST1419) . As the determination result, when the sum of the updated contention window, the updated AIFS value and the required transmission time is smaller than the remaining allowable time (stepST1418: YES), the processing directly proceeds to step ST1420.

In step ST1420, random backoff selection section 312 determines whether or not the backoff value (that is, for the flow from step ST1411:NO, the backoff value set by random backoff selection section 312 in step ST1404 or step ST1416, and, for the flow from ST1415, the remaining backoff value set on and output from transmission permission section 313 in step ST1415) set on transmission permission section 313 is smaller than the contention window updated in step ST1412 or step ST1416.

As the determination result, when the backoff value set on transmission permission section 313 is smaller than the contention window updated in step ST1412 or step ST1416 (step ST1420:YES), the processing returns to step ST1405.

As the determination result, when the backoff value set on transmission permission section 313 is the contention window updated in step ST1412 or step ST1416 or more (step ST1420: NO), random backoff selection section 312 selects a backoff value randomly within the updated contention window (step ST1421).

Thus, according to this embodiment, station 500 is provided with: transmission permission section 313 that controls transmission timing of transmission data from an AIFS value and backoff value, and more specifically, that controls transmission of transmission data when a medium is in the idle state after a lapse of predetermined waiting time obtained from an AIFS value determined by AIFS management section 181 and the backoff value; AIFS management section 181 that adjusts the AIFS value regarding the transmission data in accordance with an elapsed time from the occurrence of a transmission request for the transmission data; contention window management section 511 that adjusts the size of a contention window that defines a range that the backoff value is able to take in accordance with the elapsed time; further, required transmission time calculating section 512 that calculates the required transmission time necessary for transmission of the transmission data; and remaining allowable time calculating section 513 that obtains a remaining time (the above-mentioned remaining allowable time) up to a timeout where the transmission data is discarded.

Then, contention window management section 511 adjusts a maximum value of the contention window size to a difference between the remaining time and the sum of the required transmission time and AIFS, when the remaining time is smaller than the sum of the maximum value of the contention window size, the required transmission time and AIFS.

In this way, for transmission data with a long elapsed time from the occurrence of a transmission request for the transmission data, it is possible not only to set a small AIFS value but also to set the size of a contention window in a range that the backoff value is able to take, at a small value, thereby setting predetermined waiting time obtained from the AIFS value and the backoff value at a small value as well. Further, a maximum value of the contention window size is determined by calculating back from the timeout time. Therefore, the possibility becomes high that the transmission data is preferentially transmitted rather than other transmission data, and it is thus possible to decrease the possibility that the transmission data is discarded by timeout. As the result, it is possible to improve the reliability and stability of communication.

A first aspect of a communication apparatus of the present invention adopts a configuration provided with a transmission controller that controls transmission timing of transmission data using predetermined waiting time (AIFS) depending on a data type, and a backoff value, and an AIFS setter that adjusts AIFS of the transmission data in accordance with an elapsed time from the occurrence of a transmission request for the transmission data or the number of retransmissions of the transmission data.

According to this configuration, a small AIFS value can be set on transmission data with a long elapsed time from the occurrence of a transmission request for the transmission data, and the predetermined waiting time obtained from the AIFS value and the backoff value is also set at a small value. Therefore, the possibility becomes high that the transmission data is preferentially transmitted rather than other transmission data, and it is thus possible to decrease the possibility that the transmission data is discarded by timeout. As the result, it is possible to improve the reliability and stability of communication. Further, a small AIFS value can be set on transmission data with the large number of retransmissions, and the predetermined waiting time obtained from the AIFS value and the backoff value is also set at a small value. Therefore, the possibility becomes high that the transmission data is preferentially transmitted rather than other transmission data, and it is thus possible to decrease the possibility of discarding the transmission data with the large number of retransmissions, that is, the transmission data presumed to have a short remaining time before timeout, by timeout. As the result, it is possible to improve the reliability and stability of communication.

With the above-mentioned configuration, a second aspect of the communication apparatus of the present invention adopts a configuration provided with a contention window setter that adjusts a size of a contention window which defines a range that the backoff value is able to take in accordance with the elapsed time.

According to this configuration, for transmission data with a long elapsed time from the occurrence of a transmission request for the transmission data, it is possible not only to set a small AIFS value but also to set a small the size of a contention window in a range that the backoff value is able to take at a small value, thereby setting predetermined waiting time obtained from the AIFS value and the backoff value at a small value as well. Therefore, the possibility becomes high that the transmission data is preferentially transmitted rather than other transmission data, and it is thus possible to decrease the possibility that the transmission data is discarded by timeout. As the result, it is possible to improve the reliability and stability of communication.

With the above-mentioned configuration, a third aspect of the communication apparatus of the present invention adopts a configuration provided with a required transmission time calculator that calculates a required transmission time necessary for transmission of the transmission data, and a remaining time calculator that obtains a remaining time up to a timeout where the transmission data is discarded, where the contention window setter adjusts a maximum value of the contention window size at a difference between the remaining time and the sum of the required transmission time and the AIFS when the remaining time is smaller than the sum of the maximum value of the contention window size, the required transmission time and the AIFS.

According to this configuration, for transmission data with a long elapsed time from the occurrence of a transmission request for the transmission data, it is possible not only to set a small AIFS value but also to set a small the size of a contention window that is in a range that the backoff value is able to take at a small value, thereby setting predetermined waiting time obtained from the AIFS value and the backoff value at a small value as well. Further, a maximum value of the contention window size is obtained by calculating back from the timeout time. Therefore, the possibility becomes high that the transmission data is preferentially transmitted rather than other transmission data, and it is thus possible to decrease the possibility that the transmission data is discarded by timeout. As the result, it is possible to improve the reliability and stability of communication.

With the above-mentioned configuration, a fourth aspect of the communication apparatus of the present invention adopts a configuration provided with a contention window setter that adjusts the size of a contention window which defines a range that the backoff value is able to take to be small in accordance with the number of retransmissions when the number of retransmissions exceeds a predetermined number.

According to this configuration, for transmission data with the large number of retransmissions, it is possible not only to set a small AIFS value but also to set a small the size of a contention window that is in a range that the backoff value is able to take at a small value, thereby setting predetermined waiting time obtained from the AIFS value and the backoff value at a small value as well. Therefore, the possibility becomes high that the transmission data is preferentially transmitted rather than other transmission data, and it is thus possible to decrease the possibility of discarding the transmission data with the large number of retransmissions, that is, the transmission data presumed to have a short remaining time before timeout by timeout. As the result, it is possible to improve the reliability and stability of communication.

The present application is based on Japanese Patent Application No.2004-319802 filed on November 2, 2004, the entire content of which is expressly incorporated by reference herein.

### Industrial Applicability

The communication apparatus of the present invention has an advantage of decreasing the possibility that the transmission data is discarded by timeout and improving the reliability and stability of communication. More particularly, the present invention is useful as a station and access point in a wireless LAN system to which an EDCA (enhanced distributed channel access) scheme is applied.

## Claims

1. A communication apparatus comprising:
a transmission controlling section that controls transmission timing of transmission data using predetermined waiting time (AIFS) depending on a data type and a backoff value; and
an AIFS setting section that adjusts the AIFS of the transmission data in accordance with an elapsed time from an occurrence of a transmission request for the transmission data or the number of retransmissions of the transmission data.

2. The communication apparatus according to claim 1, further comprising, a contention window setting section that adjusts a size of a contention window which defines a range that the backoff value takes in accordance with the elapsed time.

3. The communication apparatus according to claim 2, further comprising:
a required transmission time calculating section that calculates a required transmission time necessary for transmission of the transmission data; and
a remaining time calculating section that obtains a remaining time up to a timeout where the transmission data is discarded, wherein the contention window setting section adjusts a maximum value of the contention window size at a difference between the remaining time and the sum of the required transmission time and the AIFS, when the remaining time is smaller than the sum of the maximum value of the contention window size, the required transmission time and the AIFS.

4. The communication apparatus according to claim 1, further comprising, a contention window setting section that adjusts a size of a contention window which defines a range that the backoff value takes to be small in accordance with the number of retransmissions when the number of retransmissions exceeds a predetermined number.
